# EUROPEAN PATENT SPECIFICATION

(11) **EP 3 477 458 B1**
(45) Date of publication and mention of the grant of the patent: **03.01.2024**
(21) Application number: 18199741.2
(22) Date of filing: 10.10.2018
(51) Int. Cl.: G06F 3/04886, G06F 3/04883

(54) **ELECTRONIC DEVICE AND METHOD OF PROVIDING SELECTABLE KEYS OF A KEYBOARD**
ELEKTRONISCHE VORRICHTUNG UND VERFAHREN ZUR BEREITSTELLUNG VON AUSWÄHLBAREN TASTEN EINER TASTATUR
DISPOSITIF ÉLECTRONIQUE ET PROCÉDÉ DE FOURNITURE DE TOUCHES SÉLECTIONNABLES D'UN CLAVIER

(30) Priority: 12.10.2017 US 201715782740
(43) Date of publication of application: 01.05.2019
(73) Proprietor: Malikie Innovations Limited, Dun Laoghaire, Dublin A96 VR66 (IE)
(72) Inventor: KOMINAR, Jeremy Lawson, Waterloo, Ontario N2K 0A7 (CA)
(74) Representative: Vigand, Philippe

(56) References cited:
- EP-A1- 2 587 355
- EP-A1- 2 597 561

## Description

### FIELD OF TECHNOLOGY

The present disclosure relates to an electronic device and method of providing selectable keys of a keyboard.

### BACKGROUND

Electronic devices, have gained widespread use and may provide a variety of functions including, for example, telephonic, electronic messaging and other personal information manager (PIM) application functions. Electronic devices include several types of devices including mobile stations such as simple cellular telephones, smart telephones, wireless PDAs, and computers.

Such electronic devices are generally intended for handheld use and ease of portability. The sizes of such devices varies and while smaller devices are generally desirable for portability, somewhat larger devices are desirable for displaying information. Touch-sensitive displays are useful on such handheld devices as the space available for user input and output is limited. In addition, the screen content on the touch-sensitive devices can be modified depending on the functions and operations being performed. Demand for improvements in user input and output continues, however.

EP 2 587 355 A1 discloses a method for performing character entry in a virtual keyboard, which involves moving keys to expose a set of secondary characters to facilitate their selection.

EP 2 597 561 A1 addresses providing a method for arranging a keypad in a wireless terminal to conveniently perform a key input while the wireless terminal is in a horizontal mode of operation.

Improvements in electronic devices with touch-sensitive displays are desirable.

### BRIEF DESCRIPTION OF THE DRAWINGS

Embodiments of the present disclosure will now be described, by way of example only, with reference to the attached figures, in which:
FIG. 1 is a block diagram of a portable electronic device in accordance with the present disclosure;
FIG. 2 is a front view of an example of an electronic device in accordance with the present disclosure;
FIG. 3 is a flowchart illustrating a method of providing selectable keys of a keyboard in accordance with the present disclosure;
FIG. 4 through FIG. 6 illustrate an example of the method of providing selectable keys of a keyboard in accordance with the disclosure;
FIG. 7 through FIG. 10 illustrate examples of the method of providing selectable keys of a keyboard in accordance with the disclosure;
FIG. 11 through FIG. 13 illustrate another example of the method of providing selectable keys of a keyboard in accordance with the disclosure;
FIG. 14 through FIG. 16 illustrate yet another example of the method of providing selectable keys of a keyboard in accordance with the disclosure.

### DETAILED DESCRIPTION

The following describes an electronic device including a display and a method of providing selectable keys of a keyboard for input on the touch-sensitive display of the electronic device. The method includes displaying the keyboard including the keys in respective first locations on the touch-sensitive display of the electronic device, receiving, via the touch-sensitive display, an input associated with the keyboard, in response to identifying the input as an input to move keys of the keyboard, moving a plurality of the keys of the keyboard to respective second locations based on a direction of the input, receiving a selection of one of the keys of the keyboard, and in response to the selection of one of the keys, returning the keys of the keyboard to the respective first locations on the touch-sensitive display.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device. Examples of electronic devices include mobile, or handheld, wireless communication devices such as cellular phones, cellular smart-phones, wireless organizers, personal digital assistants, computers, tablet computers, mobile internet devices, electronic navigation devices, and so forth.

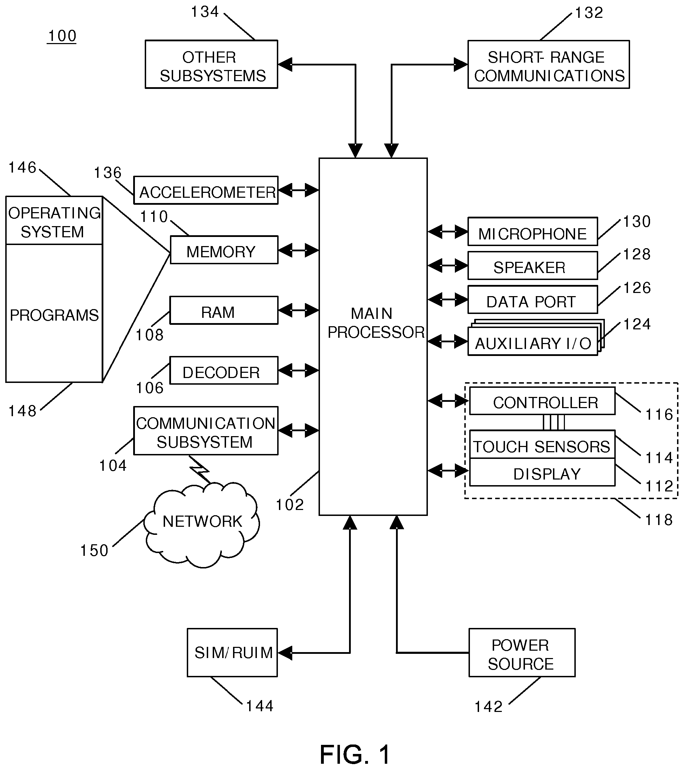

A block diagram of one example of an electronic device 100, which in the present example is a portable electronic device, is shown in FIG. 1. The electronic device 100 includes multiple components, such as a processor 102 that controls the overall operation of the electronic device 100. Communication functions, including data and voice communications, are performed through a communication subsystem 104. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as a Random Access Memory (RAM) 108, memory 110, a touch-sensitive display 118, an auxiliary input/output (I/O) subsystem 124, a data port 126, a speaker 128, a microphone 130, short-range communications 132 and other device subsystems 134. The speaker 128, also referred to as an earpiece speaker, is utilized to output audible signals when a user's ear is very close to the speaker 128. Although not shown, the processor may also interact with a loudspeaker, for example, for hands-free use.

The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the electronic device 100 may utilize a Subscriber Identity Module or a Removable User Identity Module (SIM/RUIM) card 144 for communication with a network, such as the wireless network 150. Alternatively, user identification information may be programmed into memory 110.

The electronic device 100 includes an operating system 146 and software programs, applications, or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive touch-sensitive display that includes a plurality of capacitive touch sensors 114. Capacitive touch sensors 114 include drive electrodes, also known as transmission electrodes, and sense electrodes, also known as receive electrodes. The drive electrodes generally extend in one direction and cross over or under the sense electrodes, which generally extend in another direction, generally at right angles to the direction that the drive electrodes extend, to form a grid pattern. The drive electrodes are spaced from the sense electrodes by a dielectric material. The points at which the drive electrodes and the sense electrodes cross each other are referred to as nodes. The drive and sense electrodes may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

By repeatedly scanning the electrodes of the touch-sensitive display 118 to detect touches, movement of a touch relative to the touch-sensitive display 118 may be detected. One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The touch-sensitive display 118 includes a display area in which information may be displayed, and a non-display area extending around the periphery of the display area. Information is not displayed in the non-display area of the display. The non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed in the non-display area. Touch sensors including drive electrodes and sense electrodes may be disposed in the non-display area, which touch sensors may be extended from the touch sensors in the display area or may be distinct or separate touch sensors from the touch sensors in the display area. A touch, including a gesture, may be associated with, i.e., performed on, the display area, the non-display area, or both areas. The touch sensors including the drive electrodes and the sense electrodes may extend across substantially the entire non-display area or may be disposed in only part of the non-display area.

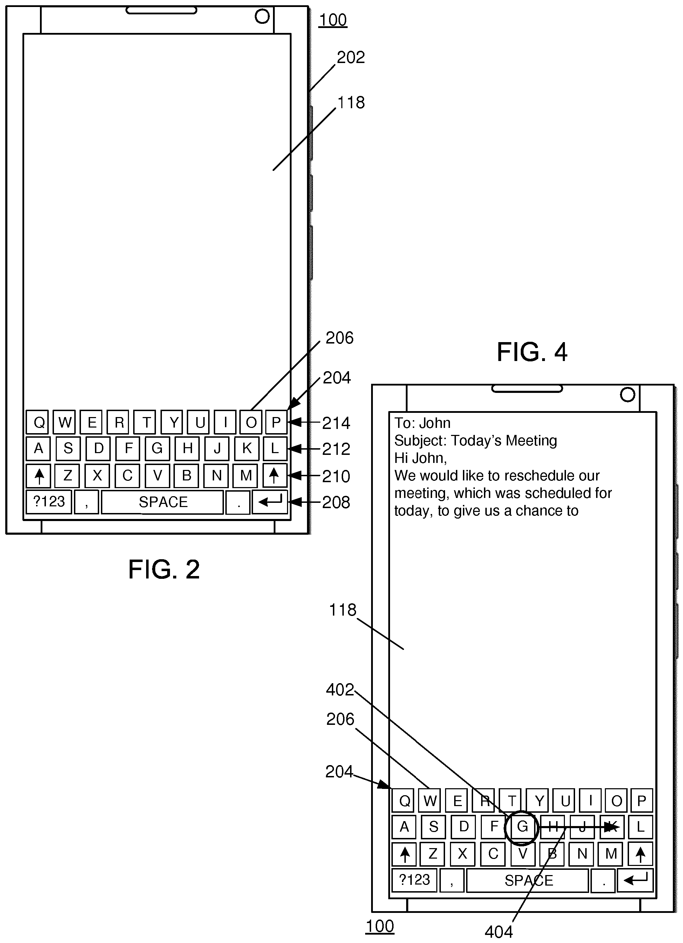

An example of an electronic device including selectable keys of a keyboard is shown in FIG. 2. In the present example, the electronic device 100 includes a housing 202 in which the touch-sensitive display 118 is disposed. The housing 202 is utilized to enclose components such as the components shown in FIG. 1.

In the example illustrated in FIG. 2, a virtual keyboard 204 is shown. The virtual keyboard 204 includes a plurality of keys 206. Each of the keys 206 of the keyboard 204 is associated with a character such that a character is entered in response to a touch on a location on the touch-sensitive display 118 associated with the respective key 206. The keyboard 204 in the present example, includes four rows of keys 206, including a first, or bottom, row 208, which includes a space key, a second row 210, a third row 212, and a fourth, or top, row 214. Other numbers of rows of keys may be implemented, however.

For the purpose of the present example, the keyboard 204 illustrated in FIG. 2 is a QWERTY keyboard. Other keyboards, such as AZERTY, QWERTZ or any other keyboard, including characters of any language, may be implemented.

In addition to the keyboard 204, information may be displayed on the touch-sensitive display 118. The information displayed may include any suitable information such as icons, text, pictures, video, documents, a webpage, or any other suitable information. The information may be associated with, for example, a home page, a menu or submenu, an application or applications, a webpage, and so forth.

The information may be any suitable information associated with an application on the electronic device 100, including information received via an internet connection. The information may also be information or content created or composed on the electronic device 100, such as a document, message, or other information stored in memory 110, or composed utilizing the keyboard 204.

The electronic device 100 illustrated in FIG. 2 may be intended for handheld use. The electronic device 100, however, is of sufficient size to provide the keyboard 204 in which each key is associated with a respective character, and a display area to display the information on the touch-sensitive display 118, above the keyboard 204 in the orientation illustrated in FIG. 2.

When the electronic device 100 is held in a single hand, selecting keys 206 on both the left and right sides of the keyboard 204 may be difficult. For example, a user holding the electronic device 100 in the right hand may select keys 206 on or near a right side of the keyboard 204. The user may not be able to select keys 206 on a left side of the keyboard 204, such as the keys 206 on the far left side, however, as the user may not be able to reach across to touch the touch-sensitive display 118 on the far left side. Thus, without utilizing both right and left hands, selectable features on the touch-sensitive display 118 may be difficult to select.

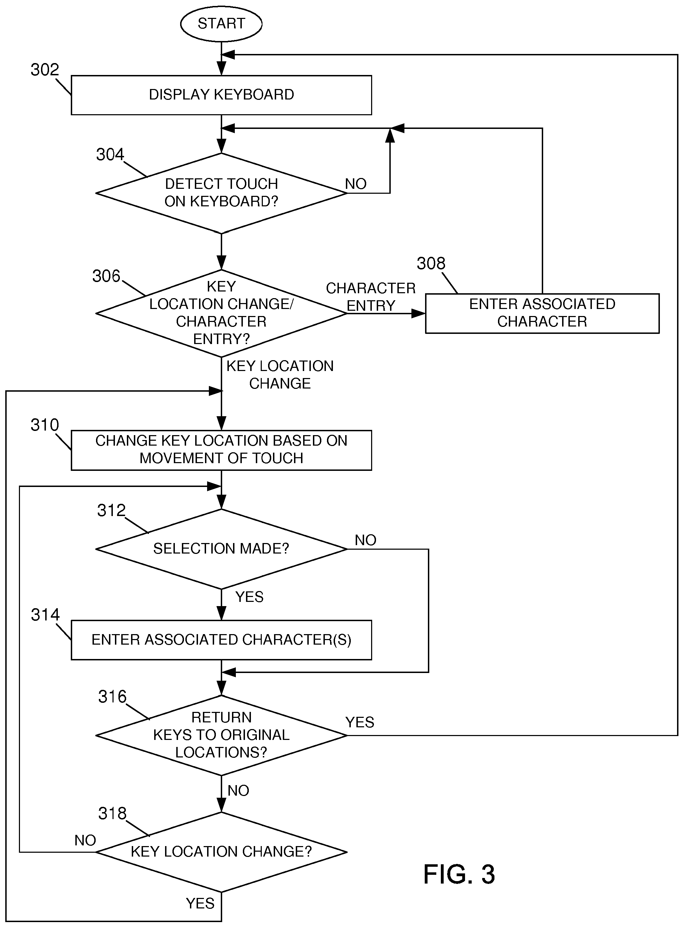

A flowchart illustrating a method of providing selectable keys of a keyboard for input on the touch-sensitive display of the electronic device is shown in FIG. 3. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor, such as the processor 102 of the portable electronic device 100, to perform the method may be stored in a computer-readable storage medium, such as a non-transitory computer-readable medium.

The virtual keyboard 204, including the keys 206, is displayed on the touch-sensitive display 118 at 302. The keyboard 204 may be displayed in association with an application executed by the processor 102, such as, for example, an electronic mail, calendar, address book, word processor, Web browser, or any other suitable application. The keyboard 204 may be displayed for entry of information, such as during composition of a document, message, note, calendar event, or any other suitable information. For example, the keyboard 204 may be displayed in response to launching an application, such as opening a word processing document, in response to selection of a field of a message, a field of a calendar event, a field of a Webpage, or in response to any other suitable action or event for entry of information.

In response to detecting a touch on the keyboard at 304, the process continues at 306. A determination is made at 306 whether the touch is associated with a change in location of the keys 206 of the keyboard 204 or selection of a key 206 of the keyboard 204 for character entry. A gesture such as a drag gesture or sliding gesture that begins at an origin location and moves generally in a straight line, may be associated with a change in key location, for example. A touch on a location associated with a key 204 and that is generally unchanged, i.e., the touch begins and ends on the same key 206 of the keyboard 204, may be associated with selection of the key 206 for entry of the associated character.

In response to determining that the touch is associated with selection of a key 206 of the keyboard 204, the associated character is entered at 308 and the process continues at 304. The associated character may be entered into a document or field displayed on the touch-sensitive display 118, for example, above the keyboard 204.

In response to determining that the touch is a gesture associated with a change in the location of keys 206 of the keyboard 204, the process continues at 310 and the locations of keys 206 of the keyboard 204 are changed based on the movement of the touch.

In one example, the keys of the keyboard may be moved in the direction of the gesture such that the locations of keys 206 in each row are changed. The keyboard 204 may be moved such that some of the keys 206 are no longer visible on the display. Thus, keys 206 appear to be moved off of the displayable area of the display. For example, keys on the right side of the display, such as the keys associated with the P, L, shift, and Enter, may be moved off the display as a drag gesture from left to right moves the keys 206 keyboard 204 from the locations shown in FIG. 2, toward the right. As the drag gesture continues, further keys may appear to be moved off of the touch-sensitive display 118.

According to another example, keys 206 in a single row may be moved in the direction of the gesture such that the locations of only the keys 206 in that row are changed. As the gesture progresses, keys within that single row may appear to be moved off the touch-sensitive display.

The keys 206 that are still visible are selectable by a touch on the touch-sensitive display 118, on an area associated with, i.e., on, the displayed keys 206 in the new locations of the keys.

Optionally, as the keys are moved with the gesture at 310, a space is created on one side of the display. For example, as keys of a row of the keyboard 204 or keys 206 of the entire keyboard 204 are moved to the right, a space in which no keys 206 are displayed is created on the left side. Similarly, as keys of a row of the keyboard 204 or keys 206 of the entire keyboard 204 are moved to the left, a space in which no keys 206 are displayed is created on the right side.

Alternatively, new keys or selectable elements may be exposed rather than a blank space being created. For example, a numerical keypad may be exposed. Alternatively or in addition, to numerical keys, punctuation keys, symbol keys, emoticons, selectable words, selectable phrases, or any other selectable elements may be exposed such that these additional keys are selectable by a touch on the area of the touch-sensitive display 118 at which the exposed keys are displayed.

In response to selection of a key at 312, the process continues at 314. A key may be selected at 312 in any suitable manner. For example, a key of the keyboard 204 may be selected in response to detecting a touch at the location on the touch-sensitive display 118 associated with that key after the gesture associated with a change in the location of keys 206 of the keyboard 204 ends. Alternatively, a key of the keyboard 204 may be selected based on the location of the keys 206 when the gesture to move a row of keys 206 is discontinued or ends. For example, a key that is at a predetermined location, identified, for example, by a cursor, highlighting, or any other suitable identifier, may be automatically selected when the gesture ends.

The character or function associated with the selected key is entered at 314. A character is therefore added to the displayed information on the touch-sensitive display 118 or the function is performed. For example, in response to selection of a key associated with a character, the character is added to the document, or to the field of the message, note, calendar event, Webpage, or any other suitable field. In response to selection of a function key, such as an enter or shift key, the function is performed.

A determination is made whether or not to return the keys 206 to their original locations at 316. In response to determining that the keys are to return to their original locations, the keys 206 are returned to the locations originally shown, for example, to the locations as illustrated in FIG. 2, and the process continues at 302. The keys 206 may be returned to their original locations, for example, in response to selection of a character at 312, or in response to entry of a function key at 312. In the example of selection of a key located at a predetermined location when the gesture to move the keys 206 ends, the keys 206 may be returned to their original locations in response to detecting the end of the gesture to move the keys 206. The keys 206 may also be returned to their original locations, for example, in response to detection of a touch on an area of the touch-sensitive display 118 at which no keys or selectable elements are displayed. Optionally, the keys 206 may be returned to their original locations after a timeout period of time without receipt of an input at the electronic device 100.

The key locations may also be further changed. For example, in response to detecting a gesture such as a drag gesture beginning on the keyboard 204, the process continues at 310 and the entire keyboard 204 of a row of the keys 206 are moved based on the movement of the gesture.

Reference is made again to FIG. 2 with reference to FIG. 4 through FIG. 6 to describe a particular example of the method of providing selectable keys of a keyboard for input on the touch-sensitive display of the electronic device, in accordance with the disclosure.

In the example of FIG. 2, FIG. 4, and FIG. 5, the keyboard 204 is displayed in an email composition interface. Thus, the electronic device 100 enters the email composition interface for the composition of an email.

For the purpose of the present example, a touch is detected on the keyboard at 304, as illustrated by the circle 402 in FIG. 4. The touch is a drag gesture in which touch contact with the touch-sensitive display 118 is maintained as the touch moves from a location on the key associated with the character "G", to the right, as illustrated by the arrow 404.

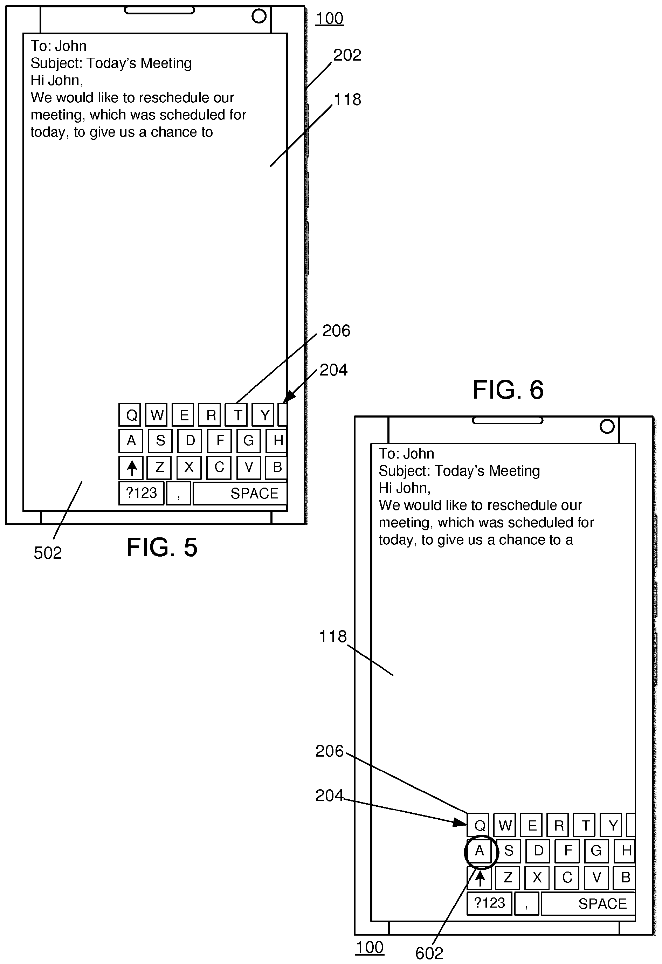

A determination is made at 306 that the touch and drag gesture is associated with a change in location of the keys 206 of the keyboard 204 and the locations of the keys 206 of the keyboard 204 are changed based on the movement of the touch. The keys 206 of the keyboard 204 are therefore moved from left to right, in the same direction of the touch and drag gesture, such that the locations of keys 206 in each row are changed. The keyboard 204 is moved about the same distance as the touch such that several of the keys 206 are no longer visible on the display, as illustrated in FIG. 5. Thus, the keys 206 on the right side of the keyboard appear to be moved off of the displayable area of the touch-sensitive display 118. In the present example, a space 502 is created on the left side of the display as the keys are moved with the gesture at 310.

The remaining keys 206 that are displayed are selectable by a touch on the touch-sensitive display 118, on the new area associated with the displayed keys 206.

A touch is detected and the key associated with the letter "A" is selected at 312, as illustrated by the circle 602. The letter "A" is entered into the field of the message at 314. For the purpose of the present example, the keys 206 of the keyboard 204 are returned to the original position in response the selection of the key associated with the letter "A", as illustrated in FIG. 6.

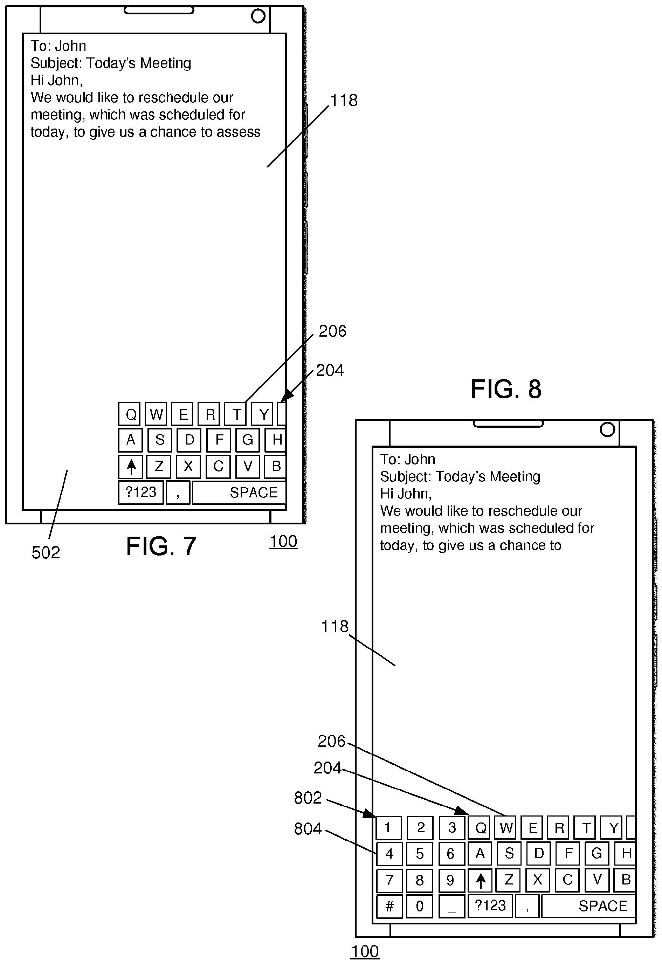

Referring now to FIG. 7, another example is illustrated. In this example, a user-selectable option to maintain the keys 206 in the locations to which the keys 206 are moved, is selected. For example, such an option may be provided in a settings menu or submenu. Thus, rather than the keys returning to the original position in response to selection of a key, the keys are returned in response to a touch on the touch-sensitive display 118, on the space created on the left side of the keyboard 204. Thus, the keys 206 of the keyboard 204 may be maintained in the locations shown in FIG. 5 until the a touch is detected on the space 502. Thus, for example, for the term "assess", the keys 206 of the keyboard 204 may remain moved to the right side as the entire word is typed, reducing the number of dragging operations for typing when successive characters are located on a same side of the keyboard 204.

In the examples described above with reference to FIG. 4 through FIG. 7, the keys 206 of the keyboard 204 are moved generally in the same direction as the gesture and a space is created on the left side of the display as the keys 206 are moved with the gesture at 310. Reference is now made to FIG. 8 to describe yet another example. Rather than creating a space as the keys 206 are moved with the gesture, a numerical keypad 802 is exposed. Display of the numerical keypad may be animated such that the numerical keypad 802 appears to be dragged over from one side, along with the keyboard 204. Alternatively, display of the numerical keypad may be animated such that the numerical keypad 802 appears to be exposed by moving the keyboard 204 out of the area in which the numerical keypad 802 is displayed. With the keys 206 of the keyboard 204 moved to their second locations as illustrated in FIG. 8, the numerical keys 804 of the numerical keypad 802 are selectable by, for example, a touch detected on the area of the touchscreen display 118 associated with a numerical key 804 of the numerical keypad 802.

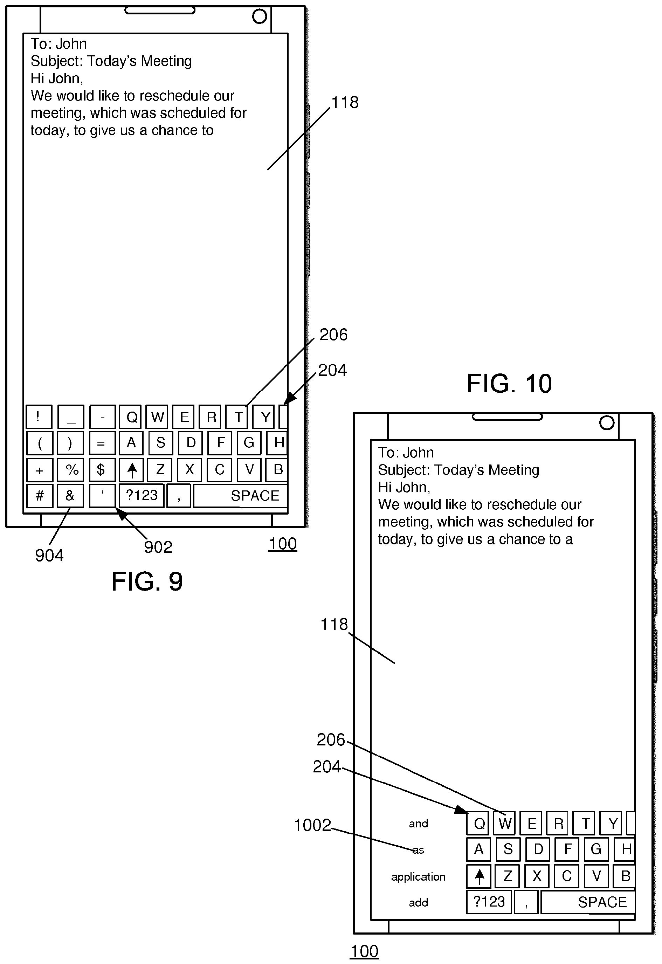

Referring now made to FIG. 9 to describe yet another example, the keys 206 are moved with the gesture. As with the example illustrated in FIG. 8, rather than creating a space as the keys 206 are moved with the gesture, further keys are exposed. In this example, symbol keys 904 of a symbol keypad 902 are exposed. As with the example described with reference to FIG. 8, display of the symbol keypad 902 may be animated such that the symbol keypad 902 appears to be dragged over from one side, along with the keyboard 204, or the symbol keypad 902 appears to be exposed by moving the keyboard 204 out of the area in which the symbol keypad 902 is displayed. With the keys 206 of the keyboard 204 moved to their second locations as illustrated in FIG. 9, the symbol keys 904 of the symbol keypad 902 are selectable by, for example, a touch detected on the area of the touchscreen display 118 associated with a symbol key 904 of the symbol keypad 902.

Referring now made to FIG. 10 to describe yet another example, the keys 206 are moved with the gesture as described above. As with the example illustrated in FIG. 8, rather than creating a space as the keys 206 are moved with the gesture, further selectable elements are exposed. In this example, selectable words 1002 are exposed. As with the example described with reference to FIG. 8, display of the selectable words 1002 may be animated such that the selectable words 1002 appear to be dragged over from one side, along with the keyboard 204, or the selectable words 1002 may appear to be exposed by moving the keyboard 204 out of the area in which the selectable words 1002 are displayed. With the keys 206 of the keyboard 204 moved to their second locations as illustrated in FIG. 10, the selectable words 1002 are selectable by, for example, a touch detected on an area of the touchscreen display 118 associated with one of the selectable words 1002. The selectable words 1002 may be determined on any suitable basis. For example, the selectable words 1002 may be displayed based on disambiguation, frequency of use of words, frequency of use of phrases, and any other suitable criteria. The selectable words may be contextual based on the application executed by the processor of the electronic device and in association with which the keyboard is displayed. Thus, the selectable words 1002 may be displayed based on disambiguation, frequency of use of words or phrases, in the context of the application running on the electronic device.

Alternatively, or in addition to exposing further selectable keys or elements, function keys or other keys that are moved off the touch-sensitive display 118 may also added to an opposite side of the touch-sensitive display 118. In the example illustrated in FIG. 5, the Enter key is moved off the touch-sensitive display by a touch and drag gesture. Optionally, an Enter key may be added in the space on the left side of the keyboard 204 as the Enter key on the right side is moved off the touch-sensitive display 118. Other keys, such as a backspace key, or any other suitable key may also be added. The additional keys may be displayed in a column including, for example, an enter key and a backspace key.

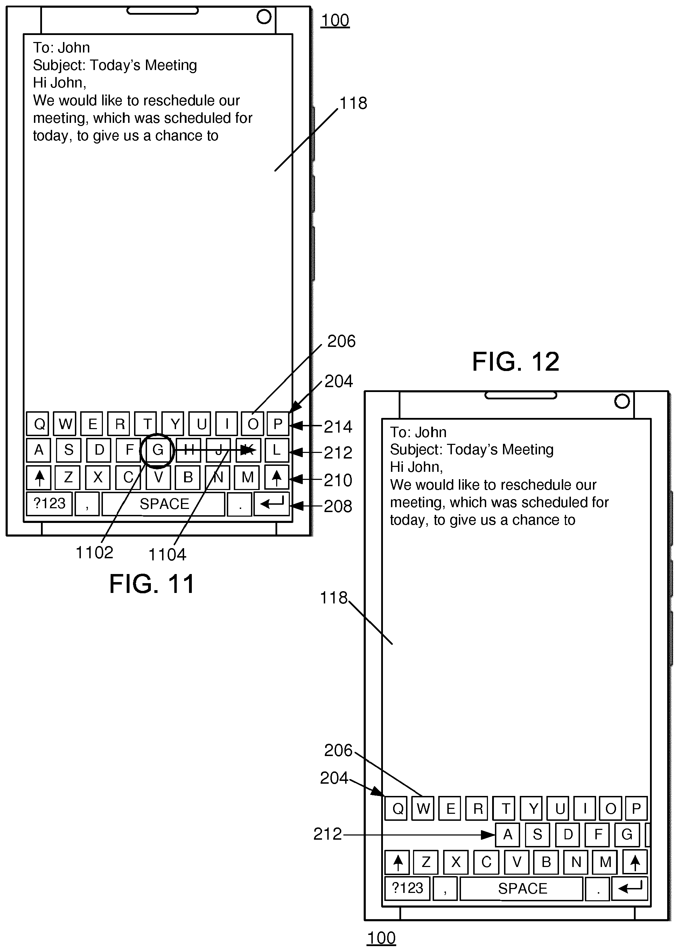

Reference now made to FIG. 3 and to FIG. 11 through FIG. 13 to describe another example of the method of providing selectable keys of a keyboard for input on the touch-sensitive display of the electronic device, in accordance with the disclosure.

For the purpose of the present example, the keyboard 204 is displayed in an email composition interface and a touch is detected on the keyboard 204 at 304, as illustrated by the circle 1102 in FIG. 11. The touch is a drag gesture in which touch contact with the touch-sensitive display 118 is maintained as the touch moves from an origin on the key associated with the character "G", to the right, as depicted by the arrow 1104.

A determination is made at 306 that the touch and drag gesture is associated with a change in location of keys 206 of the keyboard 204 and the locations of the keys 206 of the third row 212 are changed based on the movement of the touch, as illustrated in FIG. 12. The keys 206 of the third row 212 are therefore moved from left to right, in the same direction as the touch and drag gesture, such that the locations of keys 206 in the third row 212 are changed. The third row 212 of keys 206 is moved about the same distance as the touch such that some of the keys 206 of the third row 212 are no longer visible on the touch-sensitive display 118, as illustrated in FIG. 5. Thus, the keys 206 on the right side of the third row 212 of the keyboard 204 appear to be moved off of the displayable area of the touch-sensitive display 118. In the present example, a space is created on the left side of the touch-sensitive display 118 as the keys 206 of the third row 212 are moved with the gesture at 310.

The remaining keys 206 that are displayed are selectable by a touch on the touch-sensitive display 118, on the new area associated with the displayed keys 206.

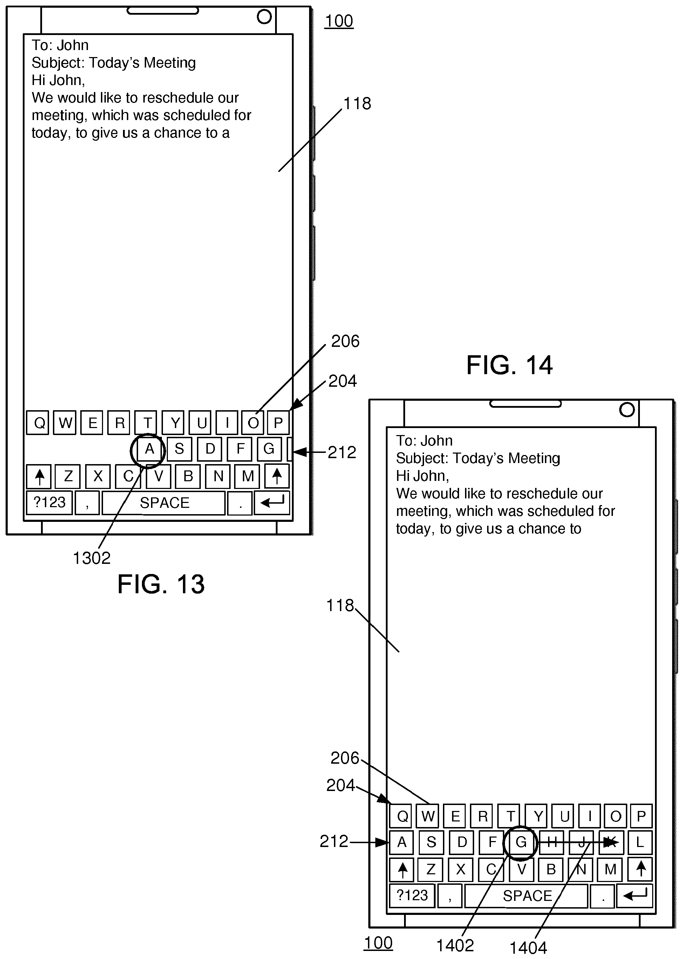

A touch is detected and the key associated with the letter "A" is selected at 312, as illustrated by the circle 1302 in FIG. 13. The letter "A" is entered into the field of the message at 314. For the purpose of the present example, the keys 206 of the third row 212 are returned to the original position in response the selection of the key associated with the letter "A".

As described above with reference to FIG. 8 through 10, rather than creating a space beside the keys 206 that are moved to the right, further selectable keys may be exposed.

Referring now FIG. 3 and to FIG. 14 through FIG. 16, yet another example of the method of providing selectable keys of a keyboard for input on the touch-sensitive display of the electronic device, in accordance with the disclosure, is provided.

For the purpose of the present example, the keyboard 204 is displayed in an email composition interface and a touch is detected on the keyboard 204 at 304, as illustrated by the circle 1402 in FIG. 14. The touch is a drag gesture in which touch contact with the touch-sensitive display 118 is maintained as the touch moves from a location on the key associated with the character "G", to the right, as illustrated by the arrow 1404.

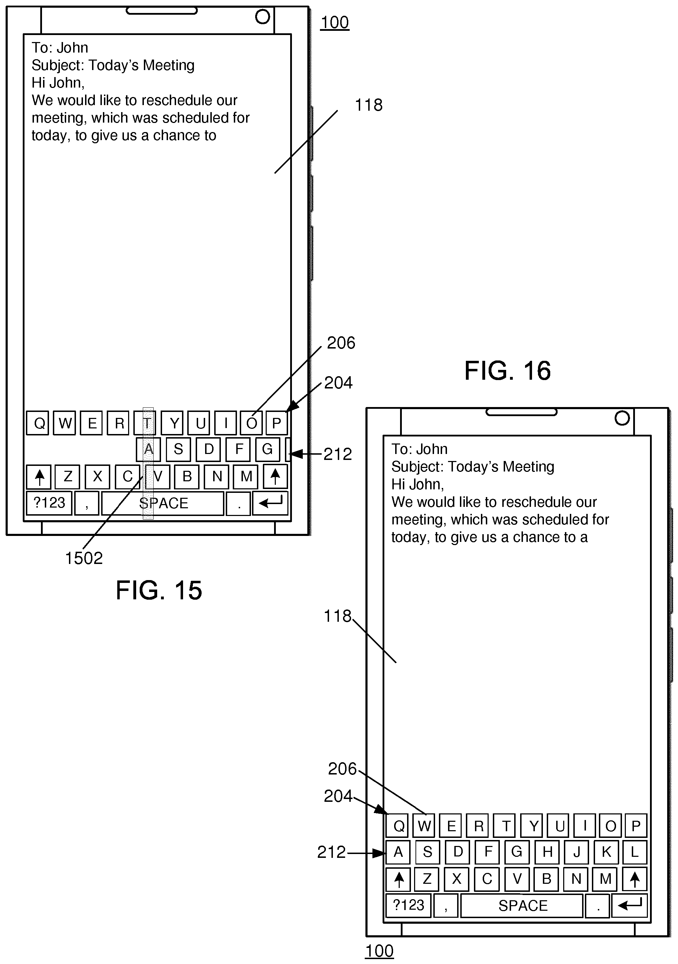

A determination is made at 306 that the touch and drag gesture is associated with a change in location of keys 206 of the keyboard 204 and the locations of the keys 206 of the third row 212 are changed based on the movement of the touch, as illustrated in FIG. 15. The keys 206 of the third row 212 are therefore moved from left to right, in the same direction as the touch and drag gesture, such that the locations of keys 206 in the third row 212 are changed. In the present example, however, a highlighted area 1502 appears on the touch-sensitive display 118 as the drag gesture begins. Thus, the highlighted area 1502 is displayed in response to detecting the drag gesture.

The third row 212 of keys 206 is moved along with the movement of the touch such that some of the keys 206 of the third row 212 are no longer visible on the touch-sensitive display 118, as illustrated in FIG. 15. Any key 206 of the third row 212 is selectable by moving the key 206 such that the key 206 intersects the highlighted area 1502 on the touch-sensitive display 118. The highlighted area 1502 is therefore provided as a guide to identify an area at which a key 206 is selected. Movement of the third row 212 of keys 206 continues until the desired key 206 of the third row 212 is in the area, i.e., intersects the highlighted area 1502, resulting in selection of that key 206. For the purpose of the present example, the keys 206 of the third row 212 are returned to the original position as illustrated in FIG 16, in response the selection of the key associated with the letter "A". The area may be a predetermined area or location that is user-configured such that the user, utilizing, for example, a setting on the electronic device, identifies the area. Alternatively, the area may be a default area.

Although a highlighted area is provided in the example described with reference to FIG. 15, other identifiers may be utilized such as a cursor, a box, or any other identifier of the predetermined location. Further, any row of the keys 206 may be similarly moved to select a key.

In the examples described herein, the keys 206 of the keyboard 204 are moved from left to right in response to detection of a gesture from left to right. The keys 206 of the keyboard 204 are also moved from right to left in response to detection of a gesture from right to left.

Optionally, the movement of the row of keys 206 of the keyboard 204 or the movement of the entire keyboard 204 in response to the gesture may be user-selectable. For example, a menu or submenu may be provided such that the either a row of keys 206 is moved or the entire keyboard moves based on the user selected option. In addition, further keys such as the numerical keys, the symbol keys, or the selectable words or phrases may also be user-selectable such that the electronic device 100 is configured to provide each of the above-described methods of providing selectable keys and the method utilized is dependent on options that are selectable in a menu or submenu related to the keyboard.

Advantageously, the electronic device and method facilitate use of the electronic device and use of a virtual keyboard with one hand. The distance that the user reaches to select a key may be reduced facilitating use of all keys of the keyboard utilizing a single hand. Such a method may also reduce the number of errors introduced that result from reaching across to type characters on an opposing side of a keyboard, thus reducing the time for character entry and the resulting battery use during character entry.

An aspect of the present disclosure provides a computer-readable medium having computer-readable code stored thereon, the computer-readable code executable by at least one processor of an electronic device to:
display a keyboard including keys in respective first locations on a touch-sensitive display of the electronic device;
receive, via the touch-sensitive display, an input associated with the keyboard;
in response to identifying the input as an input to move keys of the keyboard, move a plurality of the keys of the keyboard to respective second locations based on a direction of the input;
receive a selection of one of the keys of the keyboard;
in response to receipt of the selection of one of the keys, return the keys of the keyboard to the respective first locations on the touch-sensitive display.

Another aspect of the present disclosure provides an electronic device comprising:
a touch-sensitive display for displaying information and receiving input;
a processor operably coupled to the touch-sensitive display to control the touch-sensitive display and:
   display a keyboard including keys in respective first locations on the touch-sensitive display;
   receive, via the touch-sensitive display, an input associated with the first keyboard;
   in response to identifying the input as an input to move keys of the keyboard, move a plurality of the keys of the keyboard to respective second locations based on a direction of the input;
   receive a selection of one of the keys of the keyboard;
   in response to receipt of the selection of one of the keys, return the keys of the keyboard to the respective first locations on the touch-sensitive display.

The plurality of the keys of the keyboard may comprise keys of a single row of the keyboard selected based on an origin location of the input associated with the keyboard.

The one of the keys may be selected based on a location of the one of the keys at the end of the input associated with the keyboard.

All of the keys of the keyboard may be moved in response to identifying the input to move keys.

The scope of the claims should not be limited by the preferred embodiments set forth in the examples, but should be given the broadest interpretation consistent with the description as a whole.

## Claims

1. A method of providing selectable keys (206) of a keyboard (204) for input on a touch-sensitive display (118) of an electronic device (100), the method comprising:
displaying the keyboard (204) including the selectable keys (206) in respective first locations on the touch-sensitive display (118) of the electronic device (100), wherein all of the keys of the keyboard are displayed between a left edge of the keyboard and a right edge of the keyboard, the selectable keys (206) arranged in a plurality of rows such that each one of the plurality of rows comprises all of the selectable keys of the keyboard (204) that are arranged in a respective straight line from the left edge of the keyboard to the right edge of the keyboard (204);
receiving, via the touch-sensitive display (118), an input associated with the keyboard (204);
the method being **characterized by**
in response to identifying the input as a gesture toward a first side of the keyboard (204) to move the selectable keys (206), moving all of the selectable keys of at least one of the plurality of rows of the keyboard, including all of the keys arranged in the respective straight line from the left edge of the keyboard to the right edge of the keyboard, toward the first side of the keyboard (204) such that each of the selectable keys (206) of the at least one of the plurality of rows including all of the keys arranged in the respective straight line from the left edge of the keyboard to the right edge of the keyboard (204) are moved away from their respective first locations;
receiving a selection of one of the selectable keys (206) of the at least one of the plurality of rows of the keyboard (204) that are moved away from their respective first locations;
in response to the selection of the at least one of the selectable keys, returning the selectable keys of the at least one of the plurality of rows of the keyboard (204) to the respective first locations on the touch-sensitive display (118).

2. The method according to claim 1, wherein moving the selectable keys of the at least one of the plurality of rows of the keyboard comprises moving each of the selectable keys of only a single one of the plurality of rows of the keyboard and maintaining all other keys of the keyboard in their respective first locations.

3. The method according to claim 2, wherein the input comprises a touch and drag event and the single one of the plurality of rows is selected based on an origin of the touch and drag event.

4. The method according to claim 3, wherein receiving the selection of the one of the selectable keys comprises detecting an end of the touch and drag event.

5. The method according to claim 4, comprising entering a character associated with the one of the selectable keys disposed at a predetermined location on the touch-sensitive display, at the end of the touch and drag event.

6. The method according to claim 1, wherein moving the selectable keys of the at least one of the plurality of rows of the keyboard comprises moving the selectable keys of all of the plurality of rows of the keyboard together.

7. The method according to claim 6, wherein receiving the selection of one of the selectable keys comprises receiving selection of an enter key such that the selectable keys of the at least one of the plurality of rows of the keyboard are returned to their respective first locations in response to receipt of selection of the enter key.

8. The method according to claim 7, comprising maintaining the selectable keys of the keyboard from the at least one of the plurality of rows away from their respective first locations in response to receipt of selection of an option to maintain the selectable keys of the keyboard from the at least one of the plurality of rows.

9. The method according to claim 8, wherein receiving the selection of the one of the selectable keys of the keyboard comprises receiving selection of one of the selectable keys of the keyboard such that the selectable keys of the at least one of the plurality of rows are returned to the respective first locations in response to receipt of selection of the one of the selectable keys of the keyboard.

10. The method according to any preceding claim, wherein moving the selectable keys of the at least one of the plurality of rows of the keyboard comprises moving the selectable keys of all of the plurality of rows of the keyboard together to create a space on one side of the keyboard.

11. The method according to claim 10, comprising displaying additional keys in the space on the one side.

12. The method according to claim 11, wherein the additional keys comprise one or more of numerical keys, punctuation keys, an enter key, and a backspace key.

13. The method according to claim 10 or claim 11, comprising:
displaying selectable widgets in the space on the one side; and/or
displaying selectable words or phrases in the space on the one side, the selectable words or phrases displayed based on an application in association with which the keyboard is displayed such that the words or phrases displayed are application dependent; and/or
returning the selectable keys of the keyboard to the respective first locations on the touch-sensitive display in response to detecting a touch in the space on the one side.

14. A computer-readable medium having computer-readable code stored thereon, the computer-readable code executable by at least one processor of an electronic device to perform the method of any preceding claim.

15. An electronic device comprising:
a touch-sensitive display for displaying information and receiving input;
a processor operably coupled to the touch-sensitive display to control the touch-sensitive display and perform the method of any of claims 1 to 13.

## Patentansprüche

1. Verfahren zum Bereitstellen von auswählbaren Tasten (206) einer Tastatur (204) für eine Eingabe auf einer berührungsempfindlichen Anzeige (118) einer elektronischen Vorrichtung (100), wobei das Verfahren Folgendes umfasst:
Anzeigen der Tastatur (204), die die auswählbaren Tasten (206) an jeweiligen ersten Stellen der berührungsempfindlichen Anzeige (118) der elektronischen Vorrichtung (100) beinhaltet, wobei alle Tasten der Tastatur zwischen einer linken Kante der Tastatur und einer rechten Kante der Tastatur angezeigt werden, wobei die auswählbaren Tasten (206) in einer Vielzahl von Zeilen angeordnet sind, derart, dass jede der Vielzahl von Zeilen alle auswählbaren Tasten der Tastatur (204) umfasst, die in einer jeweiligen geraden Linie von der linken Kante der Tastatur zur rechten Kante der Tastatur (204) angeordnet sind;
Empfangen einer mit der Tastatur (204) verknüpften Eingabe via die berührungsempfindliche Anzeige (118);
wobei das Verfahren durch Folgendes gekennzeichnet ist
in Reaktion auf das Identifizieren der Eingabe als eine Geste zu einer ersten Seite der Tastatur (204), um die auswählbaren Tasten (206) zu bewegen, Bewegen von allen auswählbaren Tasten mindestens einer der Vielzahl von Zeilen der Tastatur, die alle in der jeweiligen geraden Linie von der linken Kante der Tastatur zur rechten Kante der Tastatur angeordneten Tasten beinhalten, zur ersten Seite der Tastatur (204), derart, dass jede der auswählbaren Tasten (206) der mindestens einen der Vielzahl von Zeilen, die alle in der jeweiligen geraden Linie von der linken Kante der Tastatur zur rechten Kante der Tastatur (204) angeordneten Tasten beinhaltet, von ihren jeweiligen ersten Stellen weg bewegt wird;
Empfangen einer Auswahl einer der auswählbaren Tasten (206) der mindestens einen der Vielzahl von Zeilen der Tastatur (204), die von deren jeweiligen ersten Stellen weg bewegt wird;
in Reaktion auf die Auswahl der mindestens einen der auswählbaren Tasten Zurücksetzen der auswählbaren Tasten der mindestens einen der Vielzahl von Zeilen der Tastatur (204) zu deren jeweiligen ersten Stellen auf der berührungsempfindlichen Anzeige (118).

2. Verfahren nach Anspruch 1, wobei das Bewegen der auswählbaren Tasten der mindestens einen der Vielzahl von Zeilen der Tastatur das Bewegen von jeder der auswählbaren Tasten von nur einer einzelnen der Vielzahl von Zeilen der Tastatur und das Halten von allen anderen Tasten der Tastatur an deren jeweiligen ersten Stellen umfasst.

3. Verfahren nach Anspruch 2, wobei die Eingabe ein Ereignis des Berührens und des Ziehens umfasst und die einzelne der Vielzahl von Zeilen auf Basis eines Ursprung des Ereignisses des Berührens und des Ziehens ausgewählt wird.

4. Verfahren nach Anspruch 3, wobei das Empfangen der Auswahl der einen der auswählbaren Tasten das Detektieren eines Endes des Ereignisses des Berührens und des Ziehens umfasst.

5. Verfahren nach Anspruch 4, das das Eingeben eines Zeichens, das mit der einen der auswählbaren Tasten verknüpft ist, die sich an einer vorbestimmten Stelle auf der berührungsempfindlichen Anzeige befindet, am Ende des Ereignisses des Berührens und des Ziehens umfasst.

6. Verfahren nach Anspruch 1, wobei das Bewegen der auswählbaren Tasten der mindestens einen der Vielzahl von Zeilen der Tastatur das gemeinsame Bewegen der auswählbaren Tasten von allen der Vielzahl von Zeilen der Tastatur umfasst.

7. Verfahren nach Anspruch 6, wobei das Empfangen der Auswahl von einer der auswählbaren Tasten das Empfangen einer Auswahl einer Eingabetaste umfasst, derart, dass die auswählbaren Tasten der mindestens einen der Vielzahl von Zeilen der Tastatur in Reaktion auf den Empfang der Auswahl der Eingabetaste zu deren jeweiligen ersten Stellen zurückgesetzt werden.

8. Verfahren nach Anspruch 7, das in Reaktion auf den Empfang einer Auswahl einer Option zum Halten der auswählbaren Tasten der Tastatur aus der mindestens einen der Vielzahl von Zeilen das Halten der auswählbaren Tasten der Tastatur aus der mindestens einen der Vielzahl von Zeilen von deren jeweiligen ersten Stellen weg umfasst.

9. Verfahren nach Anspruch 8, wobei das Empfangen der Auswahl der einen der auswählbaren Tasten der Tastatur das Empfangen einer Auswahl von einer der auswählbaren Tasten der Tastatur umfasst, derart, dass die auswählbaren Tasten der mindestens einen der Vielzahl von Zeilen in Reaktion auf den Empfang der Auswahl der einen der auswählbaren Tasten der Tastatur zu den jeweiligen ersten Stellen zurückgesetzt werden.

10. Verfahren nach einem der vorhergehenden Ansprüche, wobei das Bewegen der auswählbaren Tasten der mindestens einen der Vielzahl von Zeilen der Tastatur das gemeinsame Bewegen der auswählbaren Tasten von allen der Vielzahl von Zeilen der Tastatur umfasst, um auf einer Seite der Tastatur einen Raum zu erstellen.

11. Verfahren nach Anspruch 10, das das Anzeigen von zusätzlichen Tasten in dem Raum auf der einen Seite umfasst.

12. Verfahren nach Anspruch 11, wobei die zusätzlichen Tasten eines oder mehreres von numerischen Tasten, Interpunktionstasten, eine Eingabetaste und eine Rücktaste umfassen.

13. Verfahren nach Anspruch 10 oder Anspruch 11, das Folgendes umfasst:
Anzeigen von auswählbaren Widgets in dem Raum auf der einen Seite; und/oder
Anzeigen von auswählbaren Wörtern oder Phrasen in dem Raum auf der einen Seite, wobei die auswählbaren Wörter oder Phrasen auf Basis einer Anwendung angezeigt werden, in Zusammenhang mit der die Tastatur angezeigt wird, derart, dass die angezeigten Wörter oder Phrasen anwendungsabhängig sind; und/oder
Zurücksetzen der auswählbaren Tasten der Tastatur an die jeweiligen ersten Stellen auf der berührungsempfindlichen Anzeige in Reaktion auf das Detektieren einer Berührung in dem Raum auf der einen Seite.

14. Computerlesbares Medium, auf dem computerlesbarer Code gespeichert ist, wobei der computerlesbare Code von mindestens einem Prozessor einer elektronischen Vorrichtung ausführbar ist, um das Verfahren von einem der vorhergehenden Ansprüche durchzuführen.

15. Elektronische Vorrichtung, die Folgendes umfasst:
eine berührungsempfindliche Anzeige zum Anzeigen von Informationen und Empfangen von Eingaben;
einen an die berührungsempfindliche Anzeige wirkgekoppelten Prozessor zum Steuern der berührungsempfindlichen Anzeige und Durchführen des Verfahrens von einem der Ansprüche 1 bis 13.

## Revendications

1. Procédé permettant de fournir des touches sélectionnables (206) d'un clavier (204) pour une saisie sur un écran tactile (118) d'un dispositif électronique (100), le procédé comprenant :
l'affichage du clavier (204) comportant les touches sélectionnables (206) à des premiers emplacements respectifs sur l'écran tactile (118) du dispositif électronique (100), dans lequel toutes les touches du clavier sont affichées entre un bord gauche du clavier et un bord droit du clavier, les touches sélectionnables (206) étant agencées dans une pluralité de rangées de sorte que chacune de la pluralité de rangées comprenne toutes les touches sélectionnables du clavier (204) qui sont agencées en ligne droite respective du bord gauche du clavier au bord droit du clavier (204) ;
la réception, via l'écran tactile (118), d'une saisie associée au clavier (204) ;
le procédé étant **caractérisé par**
en réponse à l'identification de la saisie comme un geste vers un premier côté du clavier (204) pour déplacer les touches sélectionnables (206), le déplacement vers le premier côté du clavier (204) de toutes les touches sélectionnables d'au moins une de la pluralité de rangées du clavier comportant toutes les touches agencées en ligne droite respective du bord gauche du clavier au bord droit du clavier, de sorte que chacune des touches sélectionnables (206) de l'au moins une de la pluralité de rangées comportant toutes les touches agencées en ligne droite respective du bord gauche du clavier au bord droit du clavier (204) soit éloignée de son premier emplacement respectif ;
la réception d'une sélection de l'une des touches sélectionnables (206) de l'au moins une de la pluralité de rangées du clavier (204) qui est éloignée de son premier emplacement respectif ;
en réponse à la sélection de l'au moins l'une des touches sélectionnables, le retour des touches sélectionnables de l'au moins une de la pluralité de rangées du clavier (204) aux premiers emplacements respectifs sur l'écran tactile (118).

2. Procédé selon la revendication 1, dans lequel le déplacement des touches sélectionnables de l'au moins une de la pluralité de rangées du clavier comprend le déplacement de chacune des touches sélectionnables, uniquement d'une seule rangée de la pluralité de rangées du clavier, et le maintien de toutes les autres touches du clavier dans leurs premiers emplacements respectifs.

3. Procédé selon la revendication 2, dans lequel la saisie comprend un événement de toucher et de glisser et l'unique rangée de la pluralité de rangées est sélectionnée sur la base d'une origine de l'événement de toucher et de glisser.

4. Procédé selon la revendication 3, dans lequel la réception de la sélection de cette touche des touches sélectionnables comprend la détection de la fin de l'événement de toucher et de glisser.

5. Procédé selon la revendication 4, comprenant la saisie d'un caractère associé à cette touche des touches sélectionnables disposé à un emplacement prédéterminé sur l'écran tactile, à la fin de l'événement de toucher et de glisser.

6. Procédé selon la revendication 1, dans lequel le déplacement des touches sélectionnables de l'au moins une de la pluralité de rangées du clavier comprend le déplacement des touches sélectionnables de la totalité de pluralité de rangées du clavier ensemble.

7. Procédé selon la revendication 6, dans lequel la réception de la sélection de l'une des touches sélectionnables comprend la réception de la sélection d'une touche d'entrée de sorte que les touches sélectionnables de l'au moins une de la pluralité de rangées du clavier soient ramenées à leurs premiers emplacements respectifs en réponse à la réception de la sélection de la touche d'entrée.

8. Procédé selon la revendication 7, comprenant le maintien des touches sélectionnables du clavier de l'au moins une de la pluralité de rangées loin de leurs premiers emplacements respectifs en réponse à la réception de la sélection d'une option pour maintenir les touches sélectionnables du clavier de l'au moins une de la pluralité de rangées.

9. Procédé selon la revendication 8, dans lequel la réception de la sélection de cette touche des touches sélectionnables du clavier comprend la réception de la sélection de l'une des touches sélectionnables du clavier de sorte que les touches sélectionnables de l'au moins une de la pluralité de rangées soient ramenées aux premiers emplacements respectifs en réponse à la réception de la sélection de cette touche des touches sélectionnables du clavier.

10. Procédé selon l'une des revendications précédentes, dans lequel le déplacement des touches sélectionnables de l'au moins une de la pluralité de rangées du clavier comprend le déplacement des touches sélectionnables de la totalité de la pluralité de rangées du clavier ensemble pour créer un espace sur un côté du clavier.

11. Procédé selon la revendication 10, comprenant l'affichage de touches supplémentaires dans l'espace sur ce côté.

12. Procédé selon la revendication 11, dans lequel les touches supplémentaires comprennent une ou plusieurs parmi des touches numériques, des touches de ponctuation, une touche d'entrée, et une touche d'effacement arrière.

13. Procédé selon la revendication 10 ou la revendication 11, comprenant :
l'affichage de gadgets logiciels sélectionnables dans l'espace sur ce côté ; et/ou
l'affichage de mots ou de phrases sélectionnables dans l'espace sur ce côté, les mots ou les phrases sélectionnables étant affichés en fonction d'une application en association avec laquelle le clavier est affiché, de sorte que les mots ou les phrases affichés dépendent de l'application ; et/ou
le retour des touches sélectionnables du clavier aux premiers emplacements respectifs sur l'écran tactile en réponse à la détection d'un toucher dans l'espace sur ce côté.

14. Support lisible par ordinateur sur lequel est stocké un code lisible par ordinateur, le code lisible par ordinateur pouvant être exécuté par au moins un processeur d'un dispositif électronique pour effectuer le procédé de l'une des revendications précédentes.

15. Dispositif électronique comprenant :
un écran tactile pour afficher des informations et recevoir une saisie ;
un processeur couplé de manière opérationnelle à l'écran tactile pour commander l'écran tactile et effectuer le procédé de l'une des revendications 1 à 13.
